# EUROPÄISCHE PATENTSCHRIFT

(11) **EP 4 118 088 B1**
(45) Veröffentlichungstag und Bekanntmachung des Hinweises auf die Patenterteilung: **16.10.2024**
(21) Anmeldenummer: 21711534.4
(22) Anmeldetag: 10.03.2021
(51) Int. Cl.: C07F 9/53, C09K 21/12, C08K 5/5397, C09D 7/48, C08K 5/00

(54) **PHOSPHANOXID-DERIVATE UND DEREN VERWENDUNG**
PHOSPHINE OXIDE DERIVATIVES AND USE THEREOF
DÉRIVÉS PHOSPHANOXYDE ET LEUR UTILISATION

(30) Priorität: 10.03.2020 DE 102020106445
(43) Veröffentlichungstag der Anmeldung: 18.01.2023
(73) Patentinhaber: Bch Brühl - Chemikalien Handel GmbH, 50321 Brühl (DE)
(72) Erfinder: NIEDERSTADT, Rule Georg, 86391 Stadtbergen (DE)
(74) Vertreter: Gulde & Partner
(86) Internationale Anmeldenummer: PCT/EP2021/056012
(87) Internationale Veröffentlichungsnummer: WO 2021/180770

(56) Entgegenhaltungen:
- CN-A- 105 040 432
- CN-A- 110 483 578

## Beschreibung

Die Erfindung betrifft Phosphanoxid-Derivate und deren Verwendung als Flammschutzmittel, sowie zur Herstellung einer brandhemmenden Lackbeschichtung und zur Herstellung polymerer Formkörper.

### Technologischer Hintergrund

Phosphor- und Stickstoffhaltige Flammschutzmittel (FSM) finden in einer Vielzahl der heutigen industriellen Produkte Verwendung. Für Flammschutzmittel auf Organophosphor-Basis werden typischerweise aromatische und aliphatische Ester der Phosphorsäure eingesetzt. Häufig sind diese zusätzlich halogeniert, wie TCEP (Tris(chlorethyl)phosphat), TCPP (Tris(chlorpropyl)phosphat) und TDCPP (Tris(dichlorisopropyl)phosphat) oder sind durch Vinyl-Gruppen funktionalisiert, wie z. B. Vinylphosphonsäure. Flammschutzmittel finden beispielsweise Verwendung in weichen und harten PUR-Schäumen für Polstermöbel, Fahrzeugsitze oder Baumaterialien. Dennoch sind Halogen-haltige FSM vielfach aus ökologischen Gründen nicht erwünscht oder nicht zugelassen. Flüssige Phosphorsäuretriester, wie beispielsweise TEHP (Tris-(2-ethylhexyl)phosphat), als FSM, haben den Nachteil, dass sie nicht in den Lack eingebunden werden und nach der Härtung durch Migration austreten können. Stickstoff-basierte FSM umfassen beispielsweise Melamin und Harnstoffderivate.

Neben Organophosphor und Stickstoff-basierten FSM werden auch anorganische Verbindungen, wie z. B. Aluminiumhydroxid, Antimonpentoxid, Borsäure, Borate, Zinnverbindungen oder Magnesiumhydroxid zur Brandhemmung verwendet. Viele davon weisen jedoch Nachteile für die UV-Strahlungshärtung von Lacken auf und eignen sich daher nur bedingt. So sind anorganische Salze aufgrund ihrer ionischen Struktur mit organischen Lacksystemen nicht zwingend kompatibel und führen zu geringeren Stabilitäten durch Ausfällungen und Fehlstellen im Lack. Die Gruppe der Metalloxide und -hydroxide müssen zumeist in großen Mengen (> 40% v. Gewicht) in der Rezeptur zugesetzt werden, was die Strahlungshärtung erschwert und auch die mechanischen Eigenschaften deutlich verschlechtert.

Im Anwendungsbereich des Flammschutzes sind auch Phosphonate und Phosphinate beschrieben. Diese Phosphonat- oder Phosphinat-basierten FSM sind insbesondere dann sehr effektiv, wenn sie mit stickstoffhaltigen Komponenten kombiniert werden. So werden zum Beispiel Ammoniumpolyphosphate (APP) als Additiv in der Industrie genutzt, sowie auch bei zahlreichen Ausrüstungen in der Textil- und Papierindustrie. APP ist jedoch aufgrund seiner ionischen Struktur und der schlechten Löslichkeit für Lacksysteme ungeeignet.

Weitere Nachteile sind auf die FSM-bedingte Hemmung der Radikalbildung zurückzuführen, welche für den Prozess der UV-Strahlungshärtung, d. h. den Kettenstart und die Polymerisation essentiell ist.

Es besteht demnach ein anhaltender Bedarf an Phosphor- und Stickstoffhaltigen Derivaten für die Verwendung als Flammschutzmittel in vorzugsweise UV-Strahlungshärtenden Lacken.

CN 105 040 432 B offenbart Phosphanoxide und ihre Verwendung als vernetzende Flammschutzmittel. CN 110 483 578 A offenbart methacrylamid-substituierte Phosphanoxide und ihre Verwendung als Flammschutzmittel.

### Zusammenfassung der Erfindung

Die vorliegende Erfindung trägt zur Lösung eines oder mehrerer der zuvor beschriebenen Probleme durch die Bereitstellung von Phosphanoxid-Derivaten der Formeln (I-1), (I-2) und (I-3) bei:

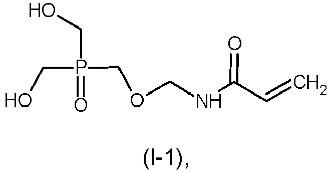

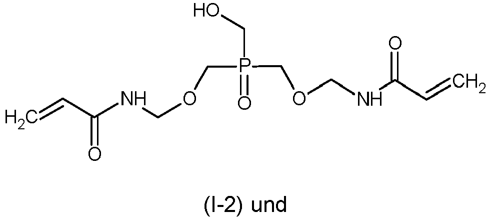

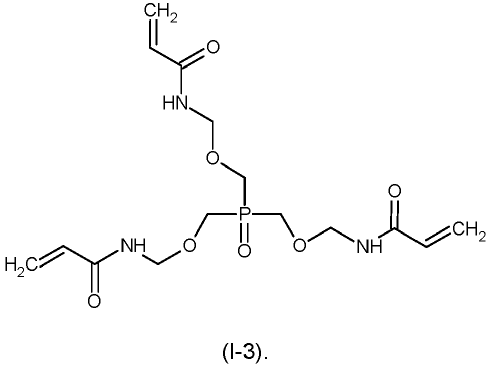

Die Herstellung der erfindungsgemäßen Phosphanoxid-Derivate kann beispielsweise durch Methylolierung eines Acrylamids und anschließende Umsetzung des methylolierten Acrylamids mit Tris(hydroxymethyl)phosphinoxid erfolgen. Der Syntheseweg erlaubt eine industrielle Herstellung der Phosphanoxid-Derivate unter Beibehaltung der reaktiven Vinyl-Gruppe(n). In einer Ausführungsform können die Methylolierung und die Umsetzung mit Tris(hydroxymethyl)phosphinoxid in einer Eintopfreaktion erfolgen. Bevorzugt können die Methylolierung und die Umsetzung mit Tris(hydroxymethyl)phosphinoxid bei unter 85°C erfolgen, besonders bevorzugt bei 60°C bis 70°C (zum Beispiel bei 65°C). Vorzugsweise erfolgt die Methylolierung und die Umsetzung mit Tris(hydroxymethyl)phosphinoxid in einem protischen Lösungsmittel, insbesondere in Ethanol.

Die erfindungsgemäßen Phosphanoxid-Derivate finden insbesondere als Flammschutzmittel (FSM) Verwendung. In ersten Versuchen hat sich eine brandhemmende Wirkung belegen können.

Ferner können die erfindungsgemäßen Phosphanoxid-Derivate zur Herstellung einer brandhemmenden Lackbeschichtung verwendet werden. Sie werden dazu als Additiv einem Lack zur Herstellung der brandhemmenden Lackbeschichtung zugesetzt. Der Lack wird vorzugsweise durch UV-Bestrahlung ausgehärtet. In ersten Vorversuchen hat sich gezeigt, dass die Additive die UV-Aushärtung derartiger Lacke weder hemmen noch unterbinden. Die Aushärtung des Lacks erfolgt insbesondere durch radikalische Polymerisation die durch UV-Bestrahlung initiiert wird, wobei die reaktiven Gruppen der anderen Lackkomponenten auch mit den Vinylgruppen des Additivs reagieren können, sodass eine kovalente Anbindung der Additive erfolgt. Hierdurch kann eine Migration der Phosphanoxid-Derivate aus der Lackbeschichtung nach der UV-Strahlungshärtung verhindert werden.

Ein weiterer Aspekt der Erfindung ist die Verwendung der erfindungsgemäßen Phosphanoxid-Derivate als Komponente eines Gemisches zur Herstellung eines polymeren Formkörpers. Der Formkörper wird durch Polymerisation des Gemisches erhalten. Die Phosphanoxid-Derivate können dabei eine Komponente der zugrundeliegenden Polymerisationsreaktion sein. Zum Beispiel ist eine radikalische Polymerisation mit weiteren im Gemisch vorhandenen Monomeren oder Oligomeren über die Vinyl-Gruppe denkbar. Ebenso können die Phosphanoxid-Derivate über ihre Hydroxyl- beziehungsweise Vinyl-Gruppen als Vernetzer dienen.

### Detaillierte Beschreibung der Erfindung

### Beispiel

200 ml Ethanol werden in einem Kolben vorgelegt und 95 g Tris(hydroxymethyl)phosphinoxid (THPO) sowie 94.8 g Acrylamid und 42.2 g Paraformaldehyd direkt hinzugegeben. Anschließend wird der Ansatz für 4 Stunden unter Rühren auf 65°C erwärmt. Danach wird durch Anlegen von Vakuum der Ansatz eingeengt. Es fällt ein Phosphanoxid-Derivat der Formeln (I-3) als klare Flüssigkeit an.

Durch Verändern des stöchiometrischen Verhältnisses lassen sich die Phosphanoxid-Derivate der Formeln (I-1) oder (I-2) beziehungsweise Gemische der Phosphanoxid-Derivate synthetisieren.

Die Phosphanoxid-Derivate lassen sich durch UV-Bestrahlung mit einer gebrauchsüblichen UV-Lichtquelle aushärten. Sie können daher beispielsweise als Additive Lacken zugesetzt werden, die durch UV-Bestrahlung ausgehärtet werden. Ebenso können sie Bestandteil eines Gemisches zur Herstellung eines polymeren Formkörpers sein. Dabei können die in den Phosphanoxid-Derivaten vorhandene Vinyl-Gruppen zum Beispiel für eine radikalische Polymerisation genutzt werden. Ebenso ist eine Vernetzung über die Vinyl- oder HydroxylGruppe denkbar.

## Patentansprüche

1. Phosphanoxid-Derivate der Formeln (I-1), (I-2) und (I-3):

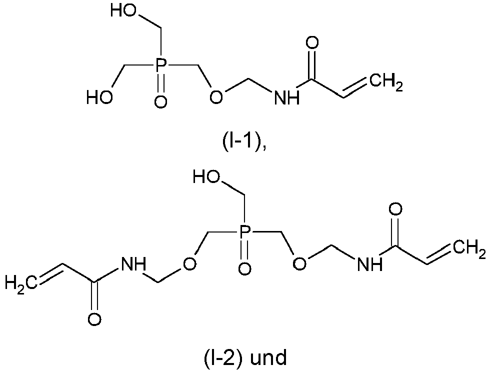

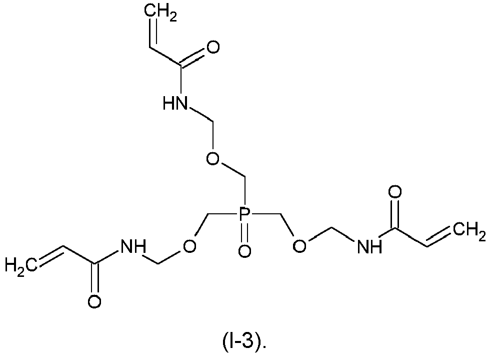

2. Verwendung eines Phosphanoxid-Derivats nach Anspruch 1 als Flammschutzmittel.

3. Verwendung eines Phosphanoxid-Derivats nach Anspruch 1 als Additiv eines Lacks zur Herstellung einer brandhemmenden Lackbeschichtung.

4. Verwendung eines Phosphanoxid-Derivats nach Anspruch 1 als Komponente eines Gemisches zur Herstellung eines polymeren Formkörpers.

## Claims

1. Phosphine oxide derivatives having the formulas (I-1), (I-2), and (I-3):

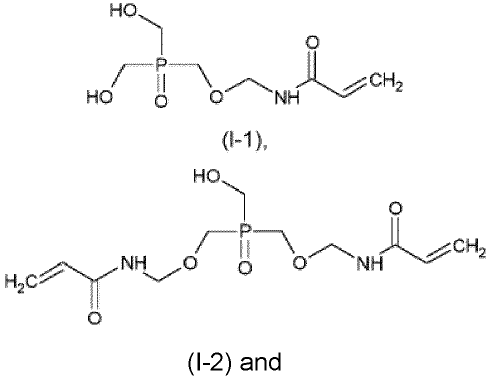

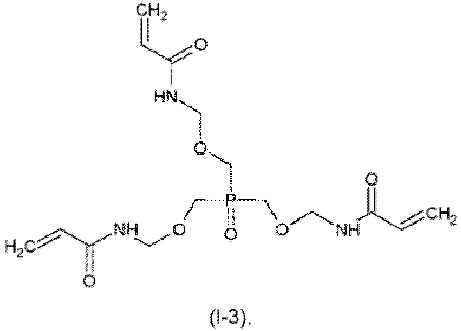

2. Use of a phosphine oxide derivative according to Claim 1 as a flame retardant.

3. Use of a phosphine oxide derivative according to Claim 1 as an additive of a varnish for manufacturing a fire-retardant varnish coating.

4. Use of a phosphine oxide derivative according to Claim 1 as a component of a mixture for manufacturing a polymeric molded body.

## Revendications

1. Dérivés d'oxyde de phosphane de formules (I-1), (I-2) et (I-3) :

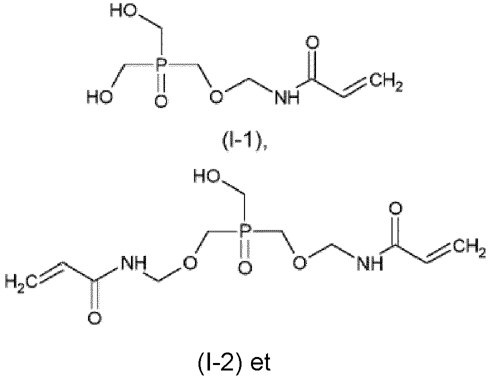

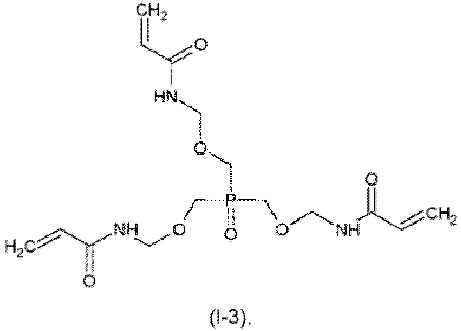

2. Utilisation d'un dérivé d'oxyde de phosphane selon la revendication 1 comme agent ignifuge.

3. Utilisation d'un dérivé d'oxyde de phosphane selon la revendication 1 comme additif d'une peinture pour la fabrication d'un revêtement de peinture ignifuge.

4. Utilisation d'un dérivé d'oxyde de phosphane selon la revendication 1 comme composant d'un mélange pour la fabrication d'un corps moulé polymère.
